# EUROPEAN PATENT SPECIFICATION

(11) **EP 4 570 120 B1**
(45) Date of publication and mention of the grant of the patent: **11.02.2026**
(21) Application number: 23837531.5
(22) Date of filing: 13.11.2023
(51) Int. Cl.: A45D 29/04, B23C 5/02, B23D 71/00, B23C 5/00

(54) **MULTIFUNCTIONAL MANICURE POLISHING HEAD**
MULTIFUNKTIONALER MANIKÜREPOLIERKOPF
TÊTE DE POLISSAGE MULTIFONCTIONNELLE POUR MANUCURE

(30) Priority: 11.10.2023 CN 202311318901
(43) Date of publication of application: 18.06.2025
(73) Proprietor: Shanghai Well-Sun Procision Tool Co., Ltd., Shanghai 200444 (CN)
(72) Inventor: WANG, Mengyi, Shanghai 200444 (CN); WANG, Jishun, Shanghai 200444 (CN); SUN, Jing, Shanghai 200444 (CN); JIANG, Wenlong, Shanghai 200444 (CN); SUN, Bo, Shanghai 200444 (CN); LIU, Lei, Shanghai 200444 (CN); LIU, Ren, Shanghai 200444 (CN); SHEN, Jiahe, Shanghai 200444 (CN); YANG, Caiyun, Shanghai 200444 (CN)
(74) Representative: Balder IP Law, S.L.
(86) International application number: PCT/CN2023/131297
(87) International publication number: WO 2025/076905

(56) References cited:
- CN-A- 1 375 384
- CN-A- 103 231 117
- CN-A- 108 581 085
- CN-A- 110 946 391
- CN-A- 110 946 391
- CN-U- 203 918 109
- CN-U- 203 918 109
- CN-U- 203 936 988
- CN-U- 205 233 768
- CN-U- 211 354 217
- CN-Y- 2 237 969

## Description

### TECHNICAL FIELD

The present application relates to a technical field of nail tools, and in particular, relates to a multifunctional nail polishing head.

### BACKGROUND ART

With the continuous improvement of people's quality of life, the beauty industry trends to develop rapidly, and requirements for beauty products are getting higher and higher, including manicure. With the increase of nail styling and styles, existing nail polishing heads are no longer able to meet the market requirements to achieve better shaping effects and convenience.

At present, a nail polishing head includes a grinding head and a grinding handle fixedly connected with each other, in which the grinding handle can be detachably fixed inside a manicuring device, the manicuring device drives the grinding head to rotate through the grinding handle, such that the grinding head polishes and removes ornaments (hard glue, soft glue, and base glue, etc) on the nail. A plurality of grinding teeth are provided on the grinding head at intervals, the grinding teeth are inclined along the rotation direction of the grinding head, and the grinding heads with different pitches are configured for different grinding situations. With the outer diameter of the grinding head, the smaller the pitch, the more grinding teeth there are, and the smaller the sharpness when used there is, which is suitable for finish machining and a small amount of grinding; the larger the pitch, the less grinding teeth there are, and the larger sharpness when used there is, which is suitable for rough machining and a large amount of grinding.

When removing the ornaments from the nail, the grinding head with larger pitch is usually at first used for rough grinding, then the grinding head with smaller pitch will be used for finish machining, and then the hard glue, soft blue and base glue can be removed, by this way the grinding head must be repeatedly replaced, which may cause inconvenience in removing the nail.

CN2 237 969 Y discloses an electric nail file. The inner of a casing is provided with a micro motor whose output shaft is connected with a connecting sleeve, a grinding wheel with spiral blade teeth is provided with a shaft which extends downwards. A part of the shaft is inserted in the casing and is connected with the connecting sleeve to synchronously rotate. A support bracket is provided between the top of the grinding wheel and the casing. The support bracket is configured both to support the top for separation and to support and position the grinding wheel.

### SUMMARY

In order to facilitate a removal of nail ornaments with different hardness, the present application provides a multifunctional nail polishing head.

In a first aspect, the multifunctional nail polishing head provided in the present application adopts the following technical solution:
A multifunctional nail polishing head includes a grinding head and a grinding handle, a plurality of first helical grooves are defined on a circumferential wall of the grinding head at intervals, the grinding head is provided with a rack between every two adjacent ones of the plurality of first helical grooves, in a radial section of the grinding head, a plurality of sets of large tooth segment are formed along a circumferential direction of the grinding head, each set of the plurality of sets of large tooth segment consists of a plurality of racks, an arrangement density of the plurality of racks in one set of the plurality of sets of large tooth segment is from sparse to dense, or from dense to sparse, or alternates dense and sparse along the circumferential direction of the grinding head, tooth heights of the plurality of racks increase with an increase of a sparsity of the plurality of racks, and the tooth heights of the plurality of racks decrease with an increase of a density of the plurality of racks.

By adopting the above technical solution, when the nail polishing head is used for grinding, a manicuring device drives the grinding head to rotate through the grinding handle, and the grinding head drives the plurality of sets of large tooth segment to rotate. The arrangement density of the racks in each set of large tooth segment is different from the other, so that the grinding head can perform both rough and finish grinding at the same time, without repeatedly replacing the nail polishing head, making it easier for a nail artist to remove nail ornaments with different hardness. Additionally, the larger the spacing between the grinding teeth is, the higher the tooth height of the grinding teeth is, and the wider the grinding root of the grinding teeth is, so that the structural strength of the grinding teeth is greater.

Preferably, a plurality of second helical grooves are defined on the circumferential wall of the grinding head at intervals, and a rotation direction of the plurality of second helical grooves is opposite to a rotation direction of the plurality of first spiral grooves, the plurality of second helical grooves divide each of the plurality of racks into a plurality of grinding teeth, and each of the plurality of grinding teeth is symmetrically provided along a connection line between an edge of each of the plurality of racks and a center of the grinding head as a symmetry line.

By adopting the above technical solution, the second helical groove divides a rack into the plurality of grinding teeth, reducing the length of the edge of the rack, so that debris generated during grinding is smaller, and debris is easily to be discharged from the second helical groove; at the same time, the grinding tooth is symmetrically provided along the symmetry line, so that the grinding head can move back and forth for grinding.

Preferably, each set of the plurality of sets of large tooth segment includes a plurality of sets of small tooth segment that are sequentially arranged, each set of the plurality of small tooth segment consists of several racks of the plurality of racks, a spacing between every two adjacent racks of the several racks in each set of the plurality of small tooth segment is equal, and arrangement densities of the several racks of different small tooth segments of the plurality of sets of small tooth segments are different.

By adopting the above technical solution, when each set of large tooth segment rotates for grinding, the plurality of sets of small tooth segment with different arrangement densities perform grinding sequentially, the quantity of racks in any set of small tooth segment determines the length of the small tooth segment, different lengths of small tooth segments. When the small tooth segment with a relative sparse arrangement density of racks is longer, the degree of rough grinding can be increased; when the small tooth segment with a relative dense arrangement density of racks is longer, the degree of finish grinding can be increased, so that the degree of rough grinding or finish grinding in each set of large tooth segment can be adjusted, thereby improving the applicability of the nail polishing head.

Preferably, a quantity of the several racks of corresponding small tooth segment in different large tooth segments is equal, and different large tooth segments have a same arrangement rule.

By adopting the above technical solution, the arrangement density and the quantity of the racks of the small tooth segment in each set of large tooth segment are the same, such that the grinding effect of the plurality of sets of large tooth segment is the same, which can improve the grinding efficiency of the nail polishing head.

Preferably, a supporting part is convexly formed on a sidewall of each of the plurality of grinding teeth facing a respective one of the plurality of first helical grooves, and the supporting part is provided along the rotation direction of the plurality of first helical grooves.

By adopting the above technical solution, the supporting part increases the structural strength of the grinding teeth, so that the grinding teeth are highly sharp and less prone to damage.

Preferably, a cross-section of each of the plurality of first helical grooves is inverted trapezoid.

By adopting the above technical solution, with the inverted trapezoidal first helical groove, the width of the tooth socket between adjacent grinding teeth can be increased, such that grinding debris is not easy to getting stuck in the first helical groove, at the same time, after the usage of the nail polishing head, it is easy to clean the debris in the first helical groove.

Optionally, a spacing between every two adjacent racks of the plurality of racks is proportional to a depth of a respective one of the plurality of first spiral grooves.

By adopting the above technical solution, the larger the spacing between adjacent racks is, the deeper the first helical groove between adjacent racks is, so that the tooth height of the grinding teeth is higher, which increases the structural strength of the grinding teeth, such that the grinding teeth are less prone to damage during rough grinding.

Preferably, an angle between the plurality of first helical grooves and the plurality of second helical grooves in a helical direction is 30-120°.

In an aspect not forming part of the present invention, a production method of multifunctional nail polishing head adopts the following technical solution:
a production method of multifunctional nail polishing head, adopting the above-mentioned multifunctional nail polishing head, includes the following processing steps: S1: processing the grinding handle and the grinding head, so that they are stepped; S2: processing a plurality of first helical grooves on the grinding head and forming a plurality of racks on the grinding head.

By adopting the above technical solution, the plurality of first helical grooves are processed on the grinding head by using a machine tool, so as to obtain a nail polishing head, thereby improving the production efficiency of the nail polishing head.

Preferably, in the step S2, S2.1: processing a plurality of helical grooves I spaced apart at equal intervals along the circumferential direction of the grinding head and forming a plurality of racks, dividing the plurality of racks into a plurality of sets of large tooth segment, the first set of large tooth segment consists of several racks; S2.2: the plurality of racks form a plurality of sets of small tooth segment in one set of large tooth segment, the first set of small tooth segment consists of several rack; S2.3: processing a helical groove II on every rack in the second small tooth segment, a width of the helical groove II is greater than that of the helical groove I; S2.4: processing a helical groove III on every two racks in the third set of small tooth segment, a width of the helical groove III is greater than that of the helical groove II; S2.5: processing a helical groove IV, a helical groove V and so on with a greater depth referring the step S2.3 and S2.4, until the first set of large tooth segment is finished and a plurality of racks are arranged sequentially or unorderly; S2.6: repeating steps S2.3-S2.5 to process the other sets of large tooth segment 5.

By adopting the above technical solution, the helical groove I is processed to form a plurality of equally sized racks at first, then the helical groove II and the helical groove III and so on are processed based on the plurality of racks, so as to more accurately and rapidly process racks with different arrangement densities and tooth heights on the grinding head.

Preferably, in steps S2.3-S2.5, after the helical groove II, the helical groove III, and the helical groove IV are processed, supporting parts are provided on the sidewalls of the grinding teeth on both sides of the helical groove.

By adopting the above technical solution, after the helical groove II, the helical groove III, and the helical groove IV are processed, the supporting parts can be formed on the sidewalls of the grinding teeth on both sides of the helical groove, making it easier to process the grinding head.

Preferably, the production method further includes step S3: a plurality of second helical grooves are processed on the grinding head, and the second helical grooves interlace with the first helical grooves.

By adopting the above technical solution, the second helical groove separates a rack into a plurality of grinding teeth, reducing the length of the edge of the rack, so that debris generated during grinding is smaller, and debris is easily discharged from the second helical groove.

In summary, the present application includes at least one of the following beneficial technical effects:
1. The grinding head drives the grinding teeth with different densities to rotate, such that the grinding head can perform both rough and finish grinding simultaneously, without repeatedly replacing the nail polishing heads, making it easier for users to remove nail ornaments with different hardness.
2. The plurality of sets of small tooth segment form a large tooth segment, such that the plurality of sets of small tooth segment with different arrangement densities can perform grinding sequentially when each set of large tooth segment rotates to perform grinding, particularly the quantity of racks in any set of small tooth segment determines the length of the small tooth segment, different lengths of the small tooth segments allow for adjustment of the degrees of rough grinding or finish grinding in each set of large tooth segment, thereby improving the applicability of the nail polishing head;
3. By adopting the inverted trapezoid first helical groove, the width of the tooth groove between adjacent grinding teeth is increased, such that grinding debris is less prone to getting stuck in the first helical groove, at the same time, it is easy to clean the debris in the first helical groove after the usage the nail polishing head.

### BRIEF DESCRIPTION OF THE DRAWINGS

FIG. 1 is a schematic overall structure view of a multifunctional nail polishing head in embodiment 1 of the present application;
FIG. 2 is a view showing the end face of the multifunctional nail polishing head in embodiment 1 of the present application, which highlights the grinding head with the first helical groove;
FIG. 3 is a view showing the end face of the multifunctional nail polishing head in embodiment 2 of the present application, which highlights the grinding head with the first helical groove;
FIG. 4 is a view showing the end face of the multifunctional nail polishing head in embodiment 3 of the present application, which highlights the grinding head with the first helical groove;
FIG. 5 is a schematic view of the multifunctional nail polishing head in embodiment 4 of the present application, which shows different shapes of the grinding head;
FIG. 6 is a flowchart of the production method of multifunctional nail polishing head in embodiment 5;
FIG. 7 is a specific flowchart of step S2 of the production method of multifunctional nail polishing head in embodiment 5;
FIG. 8 is a schematic cross-sectional view of the grinding head when step S2 of the production method of multifunctional nail polishing head in embodiment 5 is completed.

List of reference signs: 1. grinding head; 2. grinding handle; 3. first helical groove; 31. helical groove I; 32. helical groove II; 33. helical groove III; 34. helical groove IV; 4. rack; 41. grinding teeth; 5. large tooth segment; 51. small tooth segment; 6. second helical groove; 7. supporting part.

### DETAILED DESCRIPTION

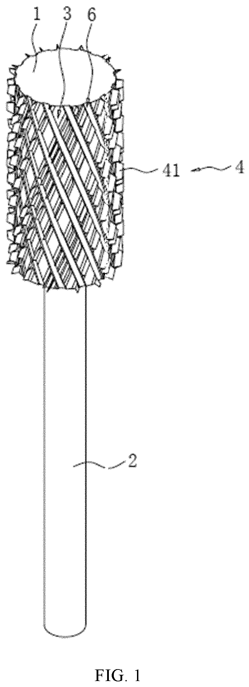

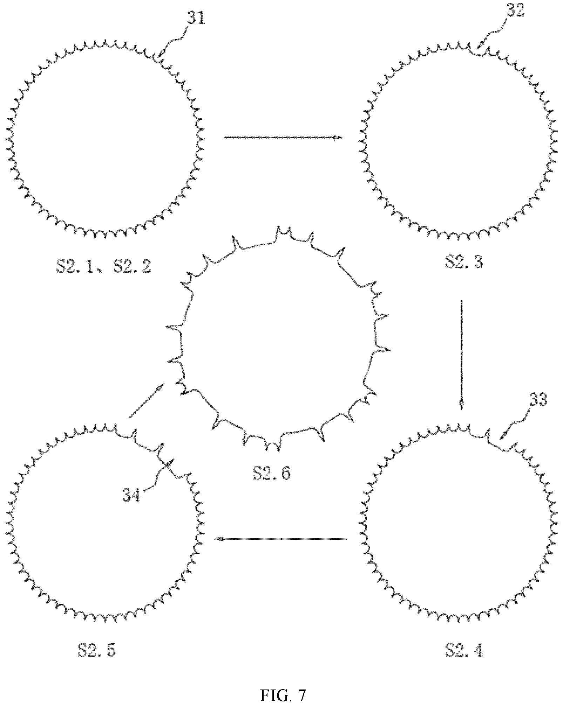

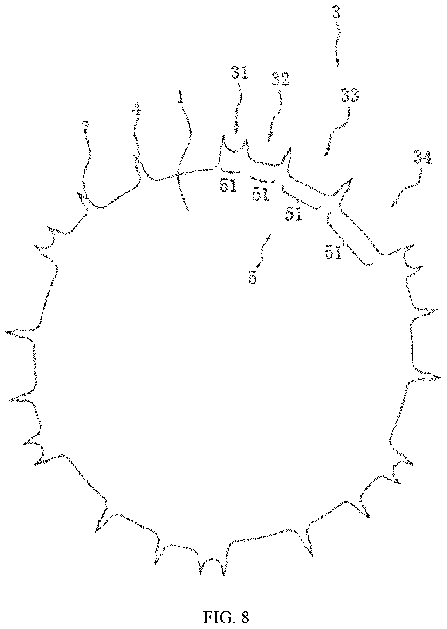

The present application is further described in detail below with reference to FIGS. 1-8.

### Embodiment 1:

The embodiment of the present application discloses a multifunctional nail polishing head.

Referring to FIG. 1, the multifunctional nail polishing head includes a grinding head 1 and a grinding handle 2, the grinding head 1 is cylindrical, the grinding handle 2 is rod-shaped. The grinding handle 2 is coaxially inserted in an end of the grinding head 1, and is welded to fix on the grinding head 1.

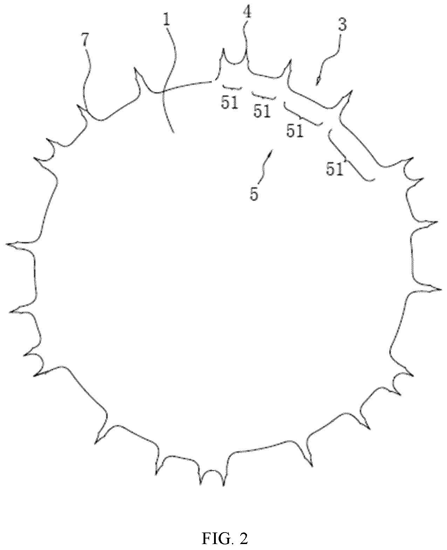

Referring to FIGS. 1 and 2, an outer peripheral wall of the grinding head 1 is configured with a first helical groove 3 along its own axis direction, the first helical groove 3 is a right-handed groove. There are a plurality of first helical grooves 3, which are spaced apart in the circumferential direction of the grinding head 1, and a left-handed rack 4 is formed between every two adjacent first helical grooves 3.

Referring to FIG. 2, in the cross-section of the grinding head 1 along the diameter direction, a plurality of sets of large tooth segment 5 are sequentially formed on the outer peripheral wall of the grinding head 1 in the circumferential direction, each set of large tooth segment 5 consists of a plurality of sets of small tooth segment 51 arranged sequentially, and each set of small tooth segment 51 consists of several racks 4. In the present embodiment, there are six sets of large tooth segment 5 on the outer peripheral wall of the grinding head 1 in the circumferential direction, each set of large tooth segment 5 consists of four sets of small tooth segment 51, and each set of small tooth segment 51 consists of two racks 4.

In the four sets of small tooth segment 51, the distance between two racks 4 gradually decreases, which makes the arrangement density of the racks 4 in one large tooth segment 5 change from sparse to dense. When using the nail polishing head for grinding, the manicuring device drives the grinding head 1 to rotate through the grinding handle 2, the grinding head 1 drives six sets of large tooth segment 5 to rotate synchronously. Both the rough and finish grinding can be performed at the same time with the grinding head 1 due to different arrangement densities of the racks 4 in each set of large tooth segment 5, therefore, it is not necessary to repeatedly replace the nail polishing head, making it easier for a nail artist to remove nail ornaments with different hardness.

In the radial section of the grinding head 1, the edge of each rack 4 is arranged in mirror symmetry along a symmetry line, which is the connection line between the edge of the rack 4 and the center of the grinding head 1. Comparing with a traditional grinding head 1, which can only move in one direction for grinding, the rack 4 is symmetrically designed, so that the grinding head 1 can move back and forth on the nail for grinding during a grinding process, making it easier for the nail artist to quickly remove nail ornaments.

A depth of the first helical groove 3 is proportional to the distance between racks 4. The denser the racks 4 in one large tooth segment 5 are arranged, the smaller the distance between two adjacent racks 4 is, and at the same time the shallower the depth of the first helical groove 3 between two adjacent racks 4 is. The sparser the racks 4 in one large tooth segment 5 are arranged, the greater the distance between two adjacent racks 4 is, and at the same time the deeper the depth of the first helical groove 3 between two adjacent racks 4 is.

The sparser the racks 4 are arranged, the deeper the depth of the first helical groove 3 is, the higher the tooth height of a corresponding rack 4 is, and the wider the tooth root of the rack 4 is, which can improve the structural strength of the rack 4. When the racks 4, which are arranged more sparsely, are used to perform a rough grinding, the racks 4 are not easily damaged because the structural strength of the rack 4 with wider tooth root is greater.

The middle part of a side wall of the rack 4 facing the first helical groove 3 is integrally formed with a supporting part 7 along the helical direction of the first helical groove 3. In the radial section of the grinding head 1, the supporting part 7 is located on the tooth surface of the rack 4, and the supporting part 7 extends to a direction departing from the rack 4. The width of the supporting part 7 on a side facing the rack 4 is greater than that on a side departing from the rack 4, and the end of the supporting part 7 departing from the rack 4 is pointed. The structural strength of the rack 4 is increased by means of the supporting part 7, further making the rack 4 less prone to being damaged.

The cross-section of the first helical groove 3 is inverted trapezoid, and the greater the first helical groove 3 is, the larger the inverted trapezoidal area of the cross-section of the first helical groove 3 is. The width of the tooth socket between adjacent grinding teeth 41 is increased by the first helical groove 3 with inverted trapezoid, such that grinding debris is less prone to getting stuck in the first helical groove 3, which is convenient for cleaning the debris in the first helical groove 3 after using the nail polishing head. At the same time, the sparser the racks 4 are arranged, the larger the debris generated during grinding is, at this time, the deeper the first helical groove 3 is, the easier it is to discharge larger debris.

Referring to FIG. 1, a second helical groove 6 is defined on the outer peripheral wall of the grinding head 1 along its own axis direction, the second helical groove 6 is a left-handed groove, the angle between the first helical groove 3 and the second helical groove 6 in helical direction is 30-120°, and the depth of the second helical groove 6 is greater than that of the first helical groove 3. There are a plurality of second helical grooves 6, which are defined along the circumferential direction of the grinding head 1 at equal intervals, and each rack 4 is evenly divided into a plurality of grinding teeth 41 by the plurality of second helical grooves 6.

The rack 4 is divided into a plurality of grinding teeth 41 by the second helical groove 6, which reduces the length of the edge of the rack 4. When the grinding head 1 rotates, the nail ornaments are ground by each grinding tooth 41 with shorter edge, to produce smaller debris, such that the debris is less prone to getting stuck in the first helical groove 3. Meanwhile, during the grinding process, the debris generated by grinding can be discharged from a deeper second helical groove 6 to the grinding head 1, further making the debris less prone to getting stuck in the first helical groove 3.

The implementation principle of embodiment 1 of the present application is as follows: when using the nail polishing head for processing and grinding, the manicuring device drives the grinding head 1 to rotate through the grinding handle 2, and the grinding head 1 drives six sets of the large tooth segment 5 to rotate synchronously, because the arrangement density of the racks 4 in each set of large tooth segment 5 is different, so the grinding head 1 can perform rough and finish machining at the same time, without repeatedly replacing the nail polishing head, and because the rack 4 is symmetrically designed, so the grinding head 1 can move back and forth on the nail for grinding during the grinding process, in addition, the larger the distance between the grinding teeth 41 is, the higher the tooth height of the grinding teeth 41 is, and the higher the structural strength of the grinding teeth 41 is. Therefore, it is convenient for the nail artist to quickly and stably remove nail ornaments with different hardness.

### Embodiment 2:

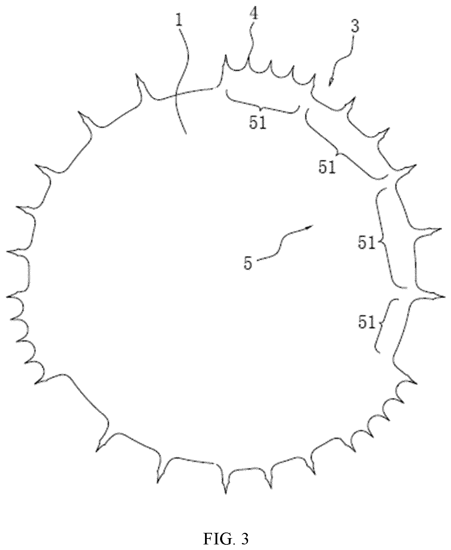

Referring to FIG. 3, the present embodiment differs from embodiment 1 in that there are three sets of large tooth segment 5 on the outer peripheral wall of the grinding head 1 along the circumferential direction, each set of large tooth segment 5 consists of four sets of small tooth segments 51, particularly, in the counterclockwise direction (referring to FIG. 2), the first set of small tooth segment 51 consists of two racks 4, the second set of small tooth segment 51 consists of three racks 4, the third set of small tooth segment 51 consists of four racks 4, and the fourth set of small tooth segment 51 consists of five racks 4.

In the direction from each first set of small tooth segment 51 to the respective fourth set of small tooth segment 51, the distance between two adjacent racks 4 of one small tooth segment 51 gradually decreases, and in each small tooth segment 51, the distance between two adjacent racks 4 is the same. In one set of large tooth segment 5, the arrangement density of the racks 4 changes from sparse to dense in the counterclockwise direction, and the quantity of the racks 4 in four small tooth segments 51 continues to increase.

The quantity of the rack 4 in any set of small tooth segment 51 determines the length of the small tooth segment 51, the degrees of rough grinding or finish grinding with each set of large tooth segment 5 can be adjusted based on different lengths of small tooth segments 51. When using the grinding head 1 for grinding, in the case that the racks 4 with lower arrangement density are less, while the racks 4 with greater arrangement density are more, the grinding head 1 is more suitable for finish grinding while conducting rough grinding, thereby improving the applicability of the nail polishing head.

The implementation principle of embodiment 2 of the present application is as follows: when each set of large tooth segment 5 rotates for grinding, the plurality of sets of small tooth segment 51 with different arrangement densities conduct grinding sequentially, by which the quantity of the racks 4 in each set of small tooth segment 51 determines the length of the small tooth segment 51, the degrees of rough grinding or finish grinding of each set of large tooth segment 5 can be adjusted based on different lengths of the small tooth segments 51, thereby improving the applicability of the nail polishing head.

### Embodiment 3:

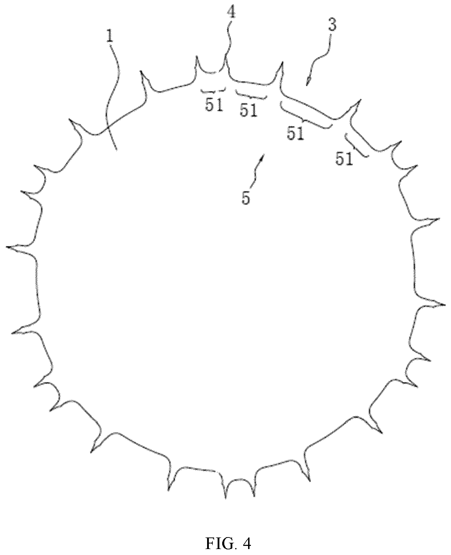

referring to FIG. 4, the present embodiment differs from embodiment 1 in that in a clockwise direction (referring to FIG. 4), the distance between two racks 4 in the first set of small tooth segment 51 is smaller than the distance between two racks 4 in the second set of small tooth segment 51, the distance between two racks 4 in the second set of small tooth segment 51 is smaller than the distance between two racks 4 in the third set of small tooth segment 51, the distance between two racks 4 in the third set of small tooth segment 51 is greater than the distance between two racks 4 in the fourth set of small tooth segment 51, and the distance between two racks 4 in the fourth set of small tooth segment 51 is greater than the distance between two racks 4 in the first set of small tooth segment 51 of the next large tooth segment 5.

Four sets of small tooth segments 51 in the first set of large tooth segment 5 and the first set of small tooth segment 51 in the next set of large tooth segment 5 are symmetrically arranged with the centerline of the third set of small tooth segment 51 in the first set of large tooth segment 5 as symmetry axis. In the cross-section of the grinding head 1 along the diameter direction, the arrangement density of the grinding teeth 41 is alternately arranged as follows: dense, sparse, dense, and sparse, or dense sparse, dense, sparse and dense along the circumferential direction of the cross-section.

The implementation principle of embodiment 3 of the present application is as follows: the arrangement density of the grinding teeth 41 is alternately arrange as follows: dense, sparse, dense, and sparse, or dense sparse, dense, sparse, and dense along the circumferential direction of the cross-section, so that the alternation of rough grinding and finish grinding is smoother when conducting grinding with the grinding head 1, thereby improving the grinding effect of the grinding head 1.

### Embodiment 4:

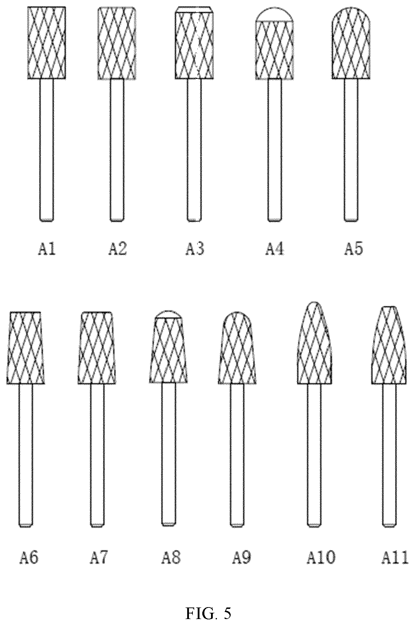

Referring to FIG. 5, the present embodiment differs from embodiment 1 in that the grinding head 1 can further be designed in other shapes such as A1 to A11, and the grinding head 1 is always coaxially installed with the grinding handle 2. In particular, the grinding head A1 is cylindrical; the grinding head A2 is cylindrical, and the circumferential edge at the end of the grinding head 1 is rounded; the grinding head A3 is cylindrical, and the circumferential edge at the end of grinding head 1 is chamfered; the bottom of the grinding head A4 is cylindrical, while the top thereof is hemispherical, and the hemisphere is smooth; the bottom of the grinding head A5 is cylindrical, while the top thereof is hemispherical, and helical grooves are defined on the hemispherical surface; the grinding head A6 is frustum-shaped; the grinding head A7 is frustum-shaped, and the circumferential edge at the end of the grinding head 1 is rounded; the bottom of a grinding head A8 is frustum-shaped, the top thereof is hemispherical, and the hemisphere is smooth; the bottom of the grinding head A9 is frustum-shaped, while the top thereof is hemispherical, and helical grooves are defined on the hemispherical surface; the grinding head A10 is a semiellipsoid; the grinding head A11 is a semiellipsoid, while the end of the grinding head 1 is a plane.

### Embodiment 5:

The embodiment not falling within the scope of the claims of the present application discloses a production method of multifunctional nail polishing head.

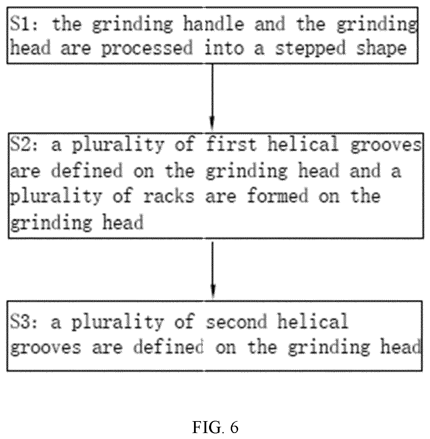

Referring to FIGS 6, 7 and 8, the production method of multifunctional nail polishing head adopts the above-mentioned multifunctional nail polishing head, which includes following processing steps:
S1: inserting the grinding handle 2 into the end of the grinding head 1 at first, and then welding to fix the grinding handle 2 to the grinding head 1; alternatively, milling a metal rod material into an integrated grinding head 1 and grinding handle 2, with the grinding head 1 and grinding handle 2 being stepped.
S2: processing a plurality of first helical grooves 3 on the grinding head 1 and forming a plurality of racks 4 on the grinding head 1.
S2.1: processing sixty helical grooves I 31 spaced apart at equal intervals along the circumferential direction of the grinding head 1 by a Computer numerical control machine tool, and forming sixty racks 4, a groove depth of the helical groove I 31 is 0.23mm; dividing the sixty racks 4 into six sets of large tooth segment 5, each set of large tooth segment 5 has ten racks 4; S2.2: dividing the plurality of racks 4 into four sets of small tooth segment 51 in clockwise direction in one set of large tooth segment 5, the first set of small tooth segment 51 includes a first rack 4 and a second rack 4, the second set of small tooth segment 51 includes the second rack 4, a third rack 4 and a fourth rack 4, the third set of small tooth segment 51 includes the fourth rack 4, a fifth rack 4, a sixth rack 4 and a seventh rack 4, and the fourth set of small tooth segment 51 includes the seventh rack 4, an eighth rack 4, a ninth rack 4 and a tenth rack 4;
S2.3: processing a helical groove II 32 with a groove depth of 0.35mm on the grinding head 1, a width of the helical groove II 32 is greater than that of the helical groove I 31, and grinding off the third rack 4 in one set of large tooth segment 5 when processing the helical groove II 32, at the same time, forming supporting parts 7 on sidewalls of two racks 4 on both sides of the helical groove II 32;
S2.4: processing a helical groove III 33 with a groove depth of 0.45mm on the grinding head 1 in the third set of small tooth segment 51, the width of the helical groove III 33 is greater than that of the helical groove II 32, and grinding off the fifth and sixth racks 4 in one set large tooth segment 5 when processing the helical groove III 33, at the same time, forming supporting parts 7 on sidewalls of two racks 4 on both sides of the helical groove III 33;
S2.5: processing a helical groove IV 34 on the grinding head 1 in the fourth set of small tooth segment 51, a depth of the helical groove IV 34 is 0.5mm, and a width of the helical groove IV 34 is greater than that of the helical groove III 33, grinding off the eighth, ninth and tenth racks 4 in one set of large tooth segment 5 when processing the helical groove IV 34, at the same time, forming supporting parts 7 on sidewalls of two racks 4 on both sides of the helical groove IV 34; S2.6: repeating steps S2.3-S2.5 to process the second to sixth sets of large tooth segment 5.
S3: processing fifteen second helical grooves 6 spaced apart at equal intervals along the circumferential direction of the grinding head 1 on the outer peripheral wall of the grinding head 1 by using the Computer numerical control machine tool, an angle between the second helical groove 6 and the first helical groove 3 in helical direction is 60°,

The present embodiment discloses a processing method of the grinding head in embodiment 1. In actual production, after the helical groove I 31 is processed along the circumferential direction of the grinding head 1, a freely variable quantity of the racks 4 can be formed, the quantity of the large tooth segments 5 which is divided in the circumferential direction of the grinding head 1 can be freely varied, the quantity of the small tooth segments 51 in each large tooth segment 5 can be freely varied, and the quantity of the racks 4 in each small tooth segment 51 can be freely varied, in one large tooth segment 5, the racks 4 in a plurality of small tooth segments 51 can be so arranged, that the arrangement density thereof varies from sparse to dense, or from dense to sparse, or the arrangement density thereof can also alternate sparse and dense.

The implementation principle of embodiment 5 of the present application is as follows: the helical groove I 31 is processed to form sixty equally sized racks 4 at first, and then the helical groove II 32, the helical groove III 33 and the helical groove IV 34 are processed based on the sixty racks 4, so as to facilitate more accurate and rapid processing of racks 4 with different arrangement densities and tooth heights on the grinding head 1. At the same time, after the helical groove II 32, the helical groove III 33 and the helical groove IV 34 are processed, the supporting parts 7 can be formed on the sidewalls of the grinding teeth 41 on both sides of the helical groove, making it easier to process the grinding head 1.

The above are the preferred embodiments of the present application, which are not intended to limit the protection scope of the present application. Therefore, all equivalent changes made according to the structure, shape and principle of the present application should be covered within the protection scope of the appended claims.

## Claims

1. A multifunctional nail polishing head, comprising a grinding head (1) and a grinding handle (2), wherein a plurality of first helical grooves (3) are defined on a circumferential wall of the grinding head (1) at intervals, the grinding head (1) is provided with a rack (4) between every two adjacent ones of the plurality of first helical grooves (3), in a radial section of the grinding head (1), a plurality of sets of large tooth segment (5) are formed along a circumferential direction of the grinding head (1), each set of the plurality of sets of large tooth segment (5) consists of a plurality of racks (4), an arrangement density of the plurality of racks (4) in one set of the plurality of sets of large tooth segment (5) is from sparse to dense, or from dense to sparse, or alternates dense and sparse along the circumferential direction of the grinding head (1), **characterized in that** tooth heights of the plurality of racks (4) increase with an increase of a sparsity of the plurality of racks (4), wherein the tooth heights of the plurality of racks (4) decrease with an increase of a density of the plurality of racks (4).

2. The multifunctional nail polishing head according to claim 1, **characterized in that** a plurality of second helical grooves (6) are defined on the circumferential wall of the grinding head (1) at intervals, a rotation direction of the plurality of second helical grooves (6) is opposite to a rotation direction of the plurality of first spiral grooves (3), the plurality of second helical grooves (6) divide each of the plurality of racks (4) into a plurality of grinding teeth (41), and each of the plurality of grinding teeth (41) is symmetrically provided along a connection line between an edge of each of the plurality of racks and a center of the grinding head (1) as a symmetry line.

3. The multifunctional nail polishing head according to claim 1, **characterized in that** each set of the plurality of sets of large tooth segment (5) comprises a plurality of sets of small tooth segment (51) that are sequentially arranged, each set of the plurality of set of small tooth segment (51) consists of several racks (4) of the plurality of racks, a spacing between every two adjacent racks (4) of the several racks in each set of the plurality of set of small tooth segment (51) is equal, and arrangement densities of the several racks (4) of different small tooth segments (51) are different.

4. The multifunctional nail polishing head according to claim 3, **characterized in that** a quantity of the several racks (4) of corresponding set of small tooth segment (51) in different sets of large tooth segment (5) is equal, and different sets of the plurality of sets of large tooth segments (5) have a same arrangement rule.

5. The multifunctional nail polishing head according to claim 2, **characterized in that** a supporting part (7) is convexly formed on a sidewall of each of the plurality of grinding teeth (41) facing a respective one of the plurality of first helical grooves (3), and the supporting part (7) is provided along the rotation direction of the plurality of first helical grooves (3).

6. The multifunctional nail polishing head according to claim 1, **characterized in that** a cross-section of each of the plurality of first helical grooves (3) is inverted trapezoid.

7. The multifunctional nail polishing head according to claim 1, **characterized in that** a spacing between every two adjacent racks (4) of the plurality of racks is proportional to a depth of a respective one of the plurality of first spiral grooves (3).

8. The multifunctional nail polishing head according to claim 1, **characterized in that** an angle between the plurality of first helical grooves (3) and the plurality of second helical grooves (6) in a helical direction is 30-120° .

## Patentansprüche

1. Multifunktionaler Nagelpolierkopf, umfassend einen Schleifkopf (1) und einen Schleifgriff (2), wobei eine Vielzahl von ersten spiralförmigen Nuten (3) in Abständen auf einer Umfangswand des Schleifkopfs (1) angeordnet ist, wobei der Schleifkopf (1) zwischen jeweils zwei benachbarten der Vielzahl von ersten spiralförmigen Nuten (3) eine Zahnleiste (4) aufweist, wobei in einem radialen Abschnitt des Schleifkopfs (1) eine Vielzahl von Sätzen großer Zahnsegmente (5) entlang einer Umfangsrichtung des Schleifkopfs (1) ausgebildet sind, jeder Satz der Vielzahl von Sätzen großer Zahnsegmente (5) aus einer Vielzahl von Zahnleisten (4) besteht, wobei eine Anordnungsdichte der Vielzahl von Zahnleisten (4) in einem Satz der Vielzahl von Sätzen großer Zahnsegmente (5) von geringer zu hoher Dichte oder von hoher zu geringer Dichte ist oder entlang der Umfangsrichtung des Schleifkopfs (1) zwischen hoher und geringer Dichte wechselt,
**dadurch gekennzeichnet,**
**dass** die Zahnhöhen der Vielzahl von Zahnleisten (4) mit abnehmender Dichte der Vielzahl von Zahnleisten (4) zunehmen, wobei die Zahnhöhen der Vielzahl von Zahnleisten (4) mit zunehmender Dichte der Vielzahl von Zahnleisten (4) abnehmen.

2. Multifunktionaler Nagelpolierkopf nach Anspruch 1, **dadurch gekennzeichnet, dass** eine Vielzahl von zweiten spiralförmigen Nuten (6) in Abständen auf der Umfangswand des Schleifkopfs (1) angeordnet ist, wobei eine Drehrichtung der Vielzahl von zweiten spiralförmigen Nuten (6) entgegengesetzt zu einer Drehrichtung der Vielzahl von ersten spiralförmigen Nuten (3) ist, wobei die Vielzahl von zweiten spiralförmigen Nuten (6) jede der Vielzahl von Zahnleisten (4) in eine Vielzahl von Schleifzähnen (41) unterteilt, und wobei jeder der Vielzahl von Schleifzähnen (41) symmetrisch entlang einer Verbindungslinie als Symmetrielinie, zwischen einer Kante jedes der Vielzahl von Zahnleisten (4) und einem Mittelpunkt des Schleifkopfs (1), angeordnet ist.

3. Multifunktionaler Nagelpolierkopf nach Anspruch 1, **dadurch gekennzeichnet, dass** jeder Satz der Vielzahl von Sätzen großer Zahnsegmente (5) eine Vielzahl von Sätzen kleiner Zahnsegmente (51) umfasst, die nacheinander angeordnet sind, wobei jeder Satz der Vielzahl von Sätzen kleiner Zahnsegmente (51) aus mehreren Zahnleisten (4) der Vielzahl von Zahnleisten (4) besteht, wobei ein Abstand zwischen jeweils zwei benachbarten Zahnleisten (4) der mehreren Zahnleisten (4) in jedem Satz der Vielzahl von Sätzen kleiner Zahnsegmente (51) gleich ist und die Anordnungsdichten der mehreren Zahnleisten (4) verschiedener kleiner Zahnsegmente (51) unterschiedlich sind.

4. Multifunktionaler Nagelpolierkopf nach Anspruch 3, **dadurch gekennzeichnet, dass** die Anzahl der mehreren Zahnleisten (4) des entsprechenden Satzes kleiner Zahnsegmente (51) in verschiedenen Sätzen großer Zahnsegmente (5) gleich ist und verschiedene Sätze der Vielzahl von Sätzen großer Zahnsegmente (5) die gleiche Anordnungsstruktur aufweisen.

5. Multifunktionaler Nagelpolierkopf nach Anspruch 2, **dadurch gekennzeichnet, dass** ein Stützelement (7) konvex an einer Seitenwand jedes der Vielzahl von Schleifzähnen (41) ausgebildet ist, die jeweils einer der Vielzahl von ersten spiralförmigen Nuten (3) zugewandt ist, wobei das Stützelement (7) entlang der Drehrichtung der Vielzahl von ersten spiralförmigen Nuten (3) angeordnet ist.

6. Multifunktionaler Nagelpolierkopf nach Anspruch 1, **dadurch gekennzeichnet, dass** ein Querschnitt jeder der Vielzahl von ersten spiralförmigen Nuten (3) ein umgekehrtes Trapez ist.

7. Multifunktionaler Nagelpolierkopf nach Anspruch 1, **dadurch gekennzeichnet, dass** ein Abstand zwischen jeweils zwei benachbarten Zahnleisten (4) der Vielzahl von Zahnleisten (4) proportional zu einer Tiefe der entsprechenden ersten spiralförmigen Nut (3) der Vielzahl von ersten spiralförmigen Nuten (3) ist.

8. Multifunktionaler Nagelpolierkopf gemäß Anspruch 1, **dadurch gekennzeichnet, dass** ein Winkel zwischen der Vielzahl von ersten spiralförmigen Nuten (3) und der Vielzahl von zweiten spiralförmigen Nuten (6) in Spiralrichtung 30-120° beträgt.

## Revendications

1. Tête de polissage multifonctionnelle pour ongles, comprenant une tête de meulage (1) et une poignée de meulage (2), dans laquelle une pluralité de premières rainures hélicoïdales (3) sont définies sur une paroi circonférentielle de la tête de meulage (1) à intervalles, la tête de meulage (1) est prévue avec une bande de dents (peigne) (4) toutes les deux rainures adjacentes de la pluralité de premières rainures hélicoïdales (3), dans une section radiale de la tête de meulage (1), une pluralité d'ensembles de grand segment de dent (5) sont formés le long d'une direction circonférentielle de la tête de meulage (1), chaque ensemble de la pluralité d'ensembles de grand segment de dent (5) se compose d'une pluralité de peignes (4), une densité d'agencement de la pluralité de peignes (4) dans un ensemble de la pluralité d'ensembles de grand segment de dent (5) va de clairsemée à dense, ou de dense à clairsemée, ou alterne entre dense et clairsemée le long de la direction circonférentielle de la tête de meulage (1), **caractérisée en ce que** les hauteurs de dent de la pluralité de peignes (4) augmentent avec une augmentation d'une rareté de la pluralité de peignes (4), dans laquelle les hauteurs de dent de la pluralité de peignes (4) diminuent avec une augmentation d'une densité de la pluralité de peignes (4).

2. Tête de polissage multifonctionnelle pour ongles selon la revendication 1, **caractérisée en ce qu'**une pluralité de secondes rainures hélicoïdales (6) sont définies sur la paroi circonférentielle de la tête de meulage (1) à intervalles, une direction de rotation de la pluralité de secondes rainures hélicoïdales (6) est opposée à une direction de rotation de la pluralité de premières rainures en spirale (3), la pluralité de secondes rainures hélicoïdales (6) divisent chacun de la pluralité de peignes (4) en une pluralité de dents de meulage (41), et chacune de la pluralité de dents de meulage (41) est symétriquement prévue le long d'une ligne de raccordement entre un bord de chacun de la pluralité de peignes et un centre de la tête de meulage (1) en tant que ligne de symétrie.

3. Tête de polissage multifonctionnelle pour ongles selon la revendication 1, **caractérisée en ce que** chaque ensemble de la pluralité d'ensembles de grand segment de dent (5) comprend une pluralité d'ensembles de petit segment de dent (51) qui sont agencés de manière séquentielle, chaque ensemble de la pluralité d'ensembles de petit segment de dent (51) se compose de plusieurs peignes (4) de la pluralité de peignes, un espacement tous les deux peignes (4) adjacents de la pluralité de peignes dans chaque ensemble de la pluralité d'ensembles de petit segment de dent (51) est égal, et les densités d'agencement de la pluralité de peignes (4) des différents petits segments de dent (51) sont différentes.

4. Tête de polissage multifonctionnelle pour ongles selon la revendication 3, **caractérisée en ce qu'**une quantité de la pluralité de peignes (4) de l'ensemble correspondant de petit segment de dent (51) dans différents ensembles de grand segment de dent (5) est égale, et différents ensembles de la pluralité d'ensembles de grands segments de dent (5) ont une règle d'agencement identique.

5. Tête de polissage multifonctionnelle pour ongles selon la revendication 2, **caractérisée en ce qu'**une partie de support (7) est formée, de manière convexe, sur une paroi latérale de chacune de la pluralité de dents de meulage (41) faisant face à une rainure respective de la pluralité de premières rainures hélicoïdales (3) et la partie de support (7) est prévue le long de la direction de rotation de la pluralité de premières rainures hélicoïdales (3).

6. Tête de polissage multifonctionnelle pour ongles selon la revendication 1, **caractérisée en ce qu'**une section transversale de chacune de la pluralité de premières rainures hélicoïdales (3) est un trapèze inversé.

7. Tête de polissage multifonctionnelle pour ongles selon la revendication 1, **caractérisée en ce qu'**un espacement tous les deux peignes (4) adjacents de la pluralité de peignes est proportionnel à une profondeur d'une rainure respective de la pluralité de premières rainures en spirale (3).

8. Tête de polissage multifonctionnelle pour ongles selon la revendication 1, **caractérisée en ce qu'**un angle entre la pluralité de premières rainures hélicoïdales (3) et la pluralité de secondes rainures hélicoïdales (6) dans une direction hélicoïdale est de 30 à 120°.
